# EUROPEAN PATENT APPLICATION

(11) **EP 4 674 263 A1**
(43) Date of publication of application: **07.01.2026**
(21) Application number: 24185831.5
(22) Date of filing: 01.07.2024
(51) Int. Cl.: A01M 7/00, B05B 1/00, B05B 9/00, G01F 1/58

(54) **EQUIPMENT FOR MONITORING THE OUTPUT FLOW OF DIFFUSER NOZZLES IN AGRICULTURAL SPRAYING MACHINES**

(71) Applicant: Barrera, Diego Hugo, X2580DQM Marcos Juárez Córdoba (AR); Cenzon, Juan Manuel, X2580CFB Marcos Juárez Córdoba (AR); Redondo del Rey, Francisco, 41089 Quinto Dos Hermanas Sevilla (ES)
(72) Inventor: Barrera, Diego Hugo, X2580DQM Marcos Juárez (AR); Cenzon, Juan Manuel, X2580CFB Marcos Juárez (AR)
(74) Representative: Sánchez Paulino, Francisco Javier

(57) **Abstract**

Equipment for monitoring the output flow of diffuser nozzles in agricultural spraying machines, comprising at least one capacitive sensor (2), specifically configured to detect changes in the dielectric permittivity of the fluid sprayed by a diffuser nozzle (1.5), which is coupled to a support (3) carrier, positioned facing the fan-shaped spray (1.6) fluid dispersed from the diffuser nozzle (1.5) of the nozzle holder (1.4). The information collected is processed by a programmable logic controller (6), which is responsible for displaying the data through display devices (7).

## Description

### PURPOSE OF THE INVENTION

The purpose of the invention is, as the title indicates, an equipment for monitoring the output flow of the diffuser nozzles in agricultural spraying machines, which monitors in real time the quality of the output flow of the fluid given off by each diffuser nozzle that a spraying machine or equipment used in agricultural applications possesses. This is an innovation that, within the current techniques, provides advantages that were unknown until now.

The present invention is characterised by the special functional and constructive characteristics of the elements that make up the device. They all work together to create an equipment for monitoring the output flow of the diffuser nozzles in agricultural spraying machines with the objective of performing a direct and precise tracking of the jet, fan or cone-shaped flow emitted by the nozzles of the machine. To achieve this, a highly sensitive capacitive sensor is used to detect the high relative permittivity (dielectric constant) εr of water, the main component of agricultural mixtures used in phytosanitary applications. This sensor is placed in proximity to the applied fluid, adjusting its height, to accommodate all varieties of nozzles on the market by means of nozzle holders or extensions, specially designed for this purpose.

### TECHNICAL SECTOR

Therefore, this invention falls within the field of agricultural devices, and in particular among those used for the dispersion of agricultural products.

### BACKGROUND OF THE INVENTION

At present, it is important to note that agricultural spraying systems lack integrated monitoring that allows the supervision of the proper application of the products being dispersed. This lack of control may result in the omission of application in certain areas due to clogged nozzles, tablets or filters. This situation highlights the need to implement technologies that allow continuous and accurate monitoring to ensure effective application of agricultural products, thus maximising efficiency and minimising waste.

A relevant precedent has been identified in the field of prior art, specifically patent application AR126714A1, filed by Mr. Juan Manuel Cenzon. This application focuses on a "Nozzle Outflow Monitoring Equipment for Agricultural Spraying Machines", the main objective of which is to perform a direct monitoring of the jet, fan or cone-shaped flow emerging from each of the nozzles of an agricultural spraying machine. To achieve this, the equipment performs a direct reading of one or more laser beams that are interrupted by the applied liquids.

Within this device, the presence of a specific support that is fixed at the base of each nozzle holder is highlighted. This support contains a laser beam emitter facing a corresponding beam (or beams) receiving sensor. In addition, it includes a corresponding electronic controller that is responsible for processing the information obtained, which is then sent to an information concentrator. It should be noted that the laser beam emitters and sensors are designed to intercept the fan-shaped fluid output dispensed by the applicator nozzle of each diffuser holder. In terms of operation, this equipment resorts to the technique of interrupting the laser beam in agricultural sprayer nozzles, using a readily available sensor such as the red LED diode used as a laser sensor.

In the case at hand, it is important to note that the implementation of a measurement using the change in dielectric permittivity leads to a significant increase in the sensitivity of optical detection, for example, through the use of lasers. This method offers multiple advantages by improving the accuracy and efficiency of data collection, which is essential in a variety of scientific and industrial applications. In addition, the use of this technique allows more reliable and accurate results to be obtained, which in turn helps to optimise the analysis and decision-making processes. It is therefore clear that the application of this approach represents a significant advance in the field of optical sensing and opens up new possibilities for the development of innovative technologies.

The relative permittivity of the water leaving the nozzles compared to the circulating air is eighty times higher, which means that there is a high contrast between the material to be measured, water, and the base material, i.e. the air surrounding the sensor. This significantly increases the signal-to-noise ratio of the system. This translates into the ability to detect much finer sprays than with optical systems, resulting in greater accuracy and sensitivity in the detection of suspended particles. This phenomenon allows better control and monitoring of processes involving liquid dispersion, which has significant applications in fields such as the chemical industry, medicine and scientific research. In addition, this feature provides a competitive advantage in the development of spraying and fogging technologies by enabling more accurate and detailed results in aerosol characterisation.

It is important to highlight that the equipment of this invention has the additional advantage of being dirt resistant, since it can be cleaned with a pressure washer thanks to its high levels of water protection, higher than IP67. This attribute ensures that the operation and durability of the equipment is not compromised by the presence of dirt or dust, making it ideal for industrial or outdoor environments where regular cleaning is essential.

In today's market, it is important to consider that fluid output nozzles come in different sizes, which has a significant impact on the efficient operation of the equipment. Additionally, the presence of properly adjusted nozzle holders is crucial to ensure that the fluid outlet nozzles are correctly positioned relative to the capacitive sensor, regardless of their size.

The equipment referred to in this invention directly monitors by observing the output spray format, to determine the quality of the fluid dispersed by each nozzle. In case of detecting any defect in the application, the equipment will alert the driver of the agricultural machinery or the robot operator in charge of its handling. This function is essential to ensure efficiency and precision in fluid dispersion, thereby contributing to the quality of the process in which the equipment is used.

As a reference to the current state of the art, it should be noted that, although different designs of output flow monitoring devices for diffuser nozzles in agricultural spraying machines exist, none possess structural and constitutive technical characteristics that are equal or similar to those presented by the invention claimed herein.

### EXPLANATION OF THE INVENTION

The object of the invention is an equipment for monitoring the output flow of the diffuser nozzles in agricultural spraying machines. Its purpose is to monitor in real time the quality of the fluid output from each diffuser nozzle of a spraying machine or equipment used in agricultural applications.

Specifically, what the invention proposes, as noted above, is monitoring equipment that is specifically intended to accurately track the jet, fan or cone-shaped flow of the spray emitted by the nozzles of an agricultural spraying machine.

This device uses the high permittivity of water, which is the main component of agricultural mixtures used in phytosanitary applications, to carry out direct detection. The relative dielectric constant εr of water is very high, allowing it to be read with a highly sensitive capacitive sensor. This sensor is placed in close proximity to the applied fluid, which is achieved by standardising the nozzle heights used in the process. The purpose of this equipment is to contribute to the development of direct and precise monitoring, thus allowing better control and optimisation of the application of plant protection products in agriculture.

The invention proposes a system in which the signal generated by the sensors is processed by a programmable logic controller. These sensors are installed on supports mechanically attached to the diffuser holders or to the machine's spraying bars. The information collected during this monitoring is transmitted in real time through digital means to display devices, where it can be interpreted by the user. In addition, audible and visual alarms are included to alert the user of any detected anomalies. It is possible to send the information obtained to the machine's overall control and drive installation, or to the robot controller responsible for its operation. This system allows for detailed monitoring and rapid response to any situation requiring attention.

This invention includes the incorporation of caps or nozzle holders of different sizes, which allows the position of the fluid outlet to be adjusted relative to the capacitive sensor. This innovative support carrier not only facilitates this functionality, but also makes it possible to determine the quality of the application depending on the type of nozzle used. Among the options available are conical nozzles, anti-drift, flat fan, inclined flat fan, as well as all combinations currently available in the market.

The support allows it to be integrated with all models of diffuser nozzles available in the market, as well as in the different types of trailed and self-propelled sprayers. Thanks to its particular mounting feature, this equipment can be easily positioned and secured, making it highly versatile and adaptable to various situations. In addition, its efficiency is evident when working in adverse wind conditions, as well as when detecting deviations in the operation of the diffuser holders. This allows for identifying possible drift problems, which is the tendency of the drops to disperse or deviate from their original trajectory due to factors such as air currents, changes in temperature, or any other external influences that may affect their movement, thereby indicating the "volatility level". This detection capability is essential to guarantee optimum performance in the application of agrochemicals, ensuring that nozzles and spraying equipment operate within the parameters established for their correct functioning.

Thanks to the capacitive sensor measurements, the programmable logic controller can calculate the size and quantity of the droplets dispersed from the fluid sprayed by each type of nozzle, and display this information.

Unless otherwise specified, all technical and scientific terms used in this document carry their customary meaning as understood by a person skilled in the relevant field of this invention. In the practice of this invention, procedures and materials similar or equivalent to those described herein may be used.

### BRIEF DESCRIPTION OF THE DRAWINGS

With the aim of completing this description and facilitating a better understanding of the invention's characteristics, this descriptive report is accompanied by several drawings, which are an integral part of the same. The figures are for illustrative purposes and are not limiting. They represent the following:

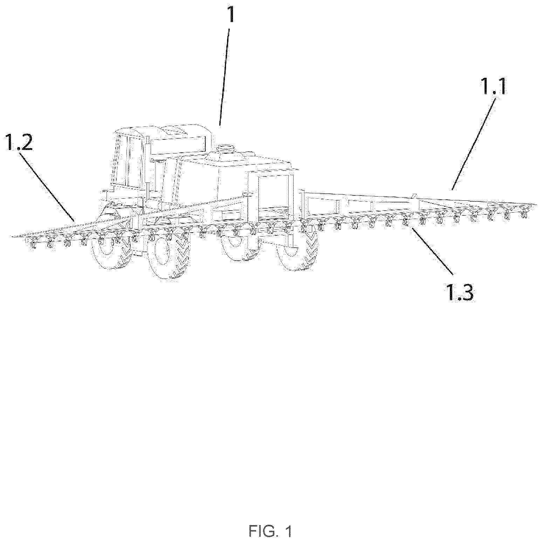

Figure 1 is a perspective representation of a spraying machine (1) of the type having spray bars (1.1) and (1.2) comprising respective pluralities of diffuser holders (1.3) extending over its front line of attack with equipment for monitoring the output flow of the diffuser nozzles in agricultural spraying machines installed.

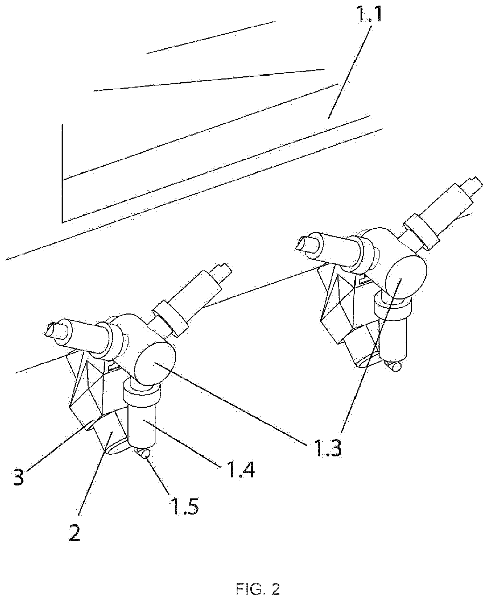

Figure 2 is a perspective representation of a spraying machine (1) of the type having spray bars (1.1) and (1.2) comprising respective pluralities of diffuser holders (1.3) showing in detail the equipment for monitoring the output flow of diffuser nozzles in agricultural spraying machines.

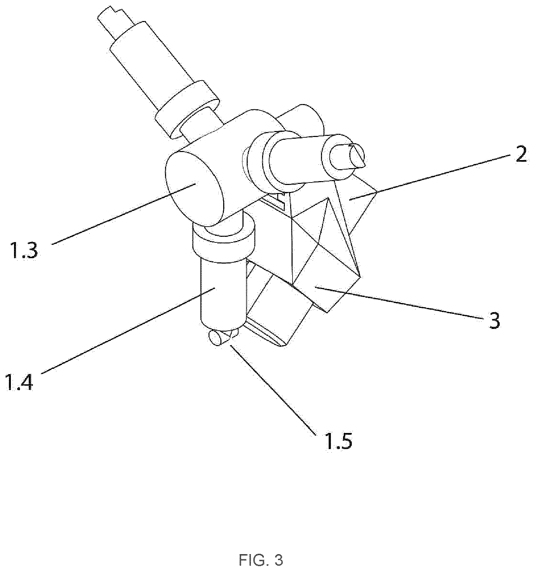

Figure 3 is a perspective representation of a diffuser holder (1.3) with the support (3) and capacitive sensor (2) attached.

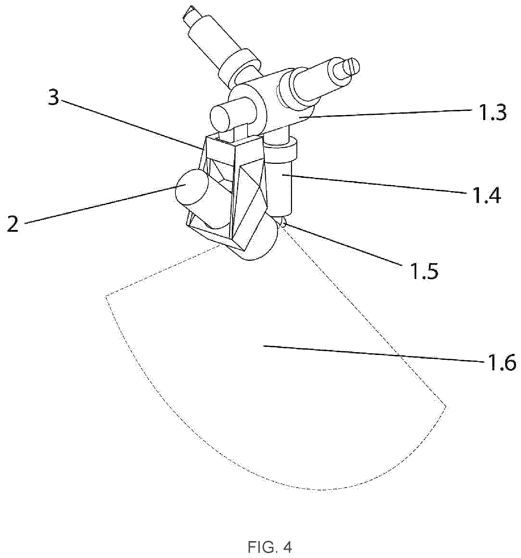

Figure 4 is a perspective representation of a diffuser holder (1.3) with the support (3) and the capacitive sensor (2) attached, showing the nozzle (1.5) dispersing the sprayed fluid, to form, in this case, a fan (1.6).

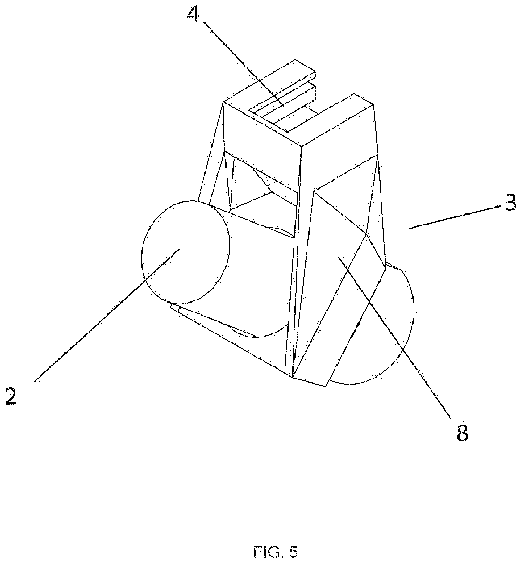

Figure 5 is a perspective representation of the support (3) and capacitive sensor (2).

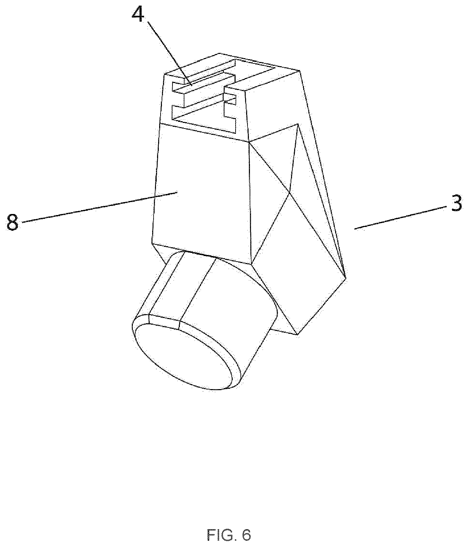

Figure 6 is a perspective representation of the support (3).

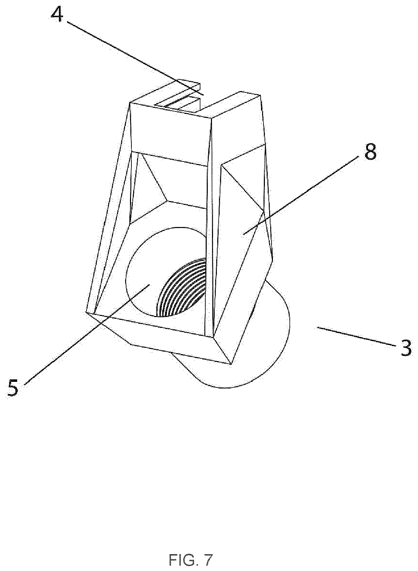

Figure 7 is a perspective representation of the support (3) from the side opposite to that shown in Figure 6.

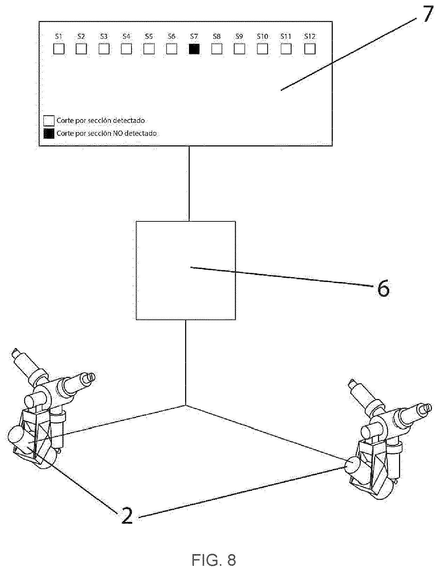

Figure 8 is a schematic representation of the installation of the programmable logic controller (6) linked to the capacitive sensor (2) and display devices (7).

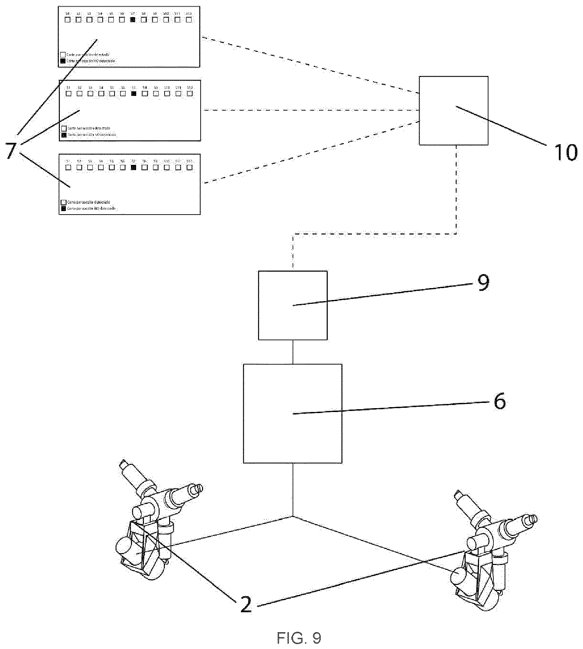

Figure 9 is a schematic representation of the installation of the programmable logic controller (6) linked to the capacitive sensor (2) in a configuration where the communication means (9), transmit the information collected by the sensor and processed by the programmable logic controller (6) to a server (10), from where it is transmitted to various devices comprising the display means (7).

### DETAILED DESCRIPTION OF A MODE OF IMPLEMENTATION OF THE INVENTION

In view of the aforementioned drawings, a preferred, but non-limiting use of the proposed invention is described below, which consists of a device for monitoring the output flow of diffuser nozzles in agricultural spraying machines.

As can be seen in the figures, the monitoring equipment referred to in this invention has been created to be applied in spraying machines (1) of the type having spraying bars (1.1) and (1.2) comprising respective pluralities of diffuser holders (1.3) extending over their front line of attack.

In this mode of implementation, each of the aforementioned diffuser holders (1.3) comprises nozzle holders (1.4) which in turn contain their respective diffuser nozzles (1.5).

The equipment for monitoring the output flow of the diffuser nozzles in agricultural spraying machines comprises at least one capacitive sensor (2), specifically configured to detect changes in the dielectric permittivity of the fluid sprayed by the diffuser nozzle (1.5). The information collected by the sensor is processed by a programmable logic controller (6), which is responsible for displaying the data through display devices (7).

These display devices (7) allow the user to monitor the flow of each diffuser nozzle (1.5) individually, facilitating early detection of possible deviations in flow, identifying any anomalies in application quality, as well as any type of obstruction that may arise. Depending on the mode of implementation, the programmable logic controller (6) comprises communication means (9), which can transmit the information collected by the sensor and processed by the programmable logic controller (6) to a server (10). From here the information can be further transmitted to various devices comprising the display means (7).

In addition, the monitoring equipment is configured to generate visual and acoustic alerts in the event of a problem, thus providing an immediate response to adverse situations. This allows the user, whether the farm machinery driver or the robot operator, to correct any issues that arise and make decisions on which protocol to follow. In addition, the data is stored to facilitate further monitoring of the situation.

This capacitive sensor (2) is coupled to a support (3) carrier, positioned to face the fan-shaped spray (1.6) dispersed from the diffuser nozzle (1.5) of the nozzle holder (1.4).

The support (3) comprises a main body (8) which in turn contains a housing (5), where the capacitive sensor (2) is fixed and housed. In its upper part, the support (3) includes some connecting means (4) for mounting onto the diffuser holders (1.3). Depending on the mode of implementation this support (3) may be water-repellent, which allows it to prevent water from accumulating on it.

As the fluid spray is dispersed from the nozzle (1.5), it expands to form a fan (1.6) which is detected in its entirety by the capacitive sensor (2). As a result, changes in the dielectric permittivity of the area are detected. This process is crucial for accurate control of fluid dispersion and ensures optimum performance in the application of this invention.

Having sufficiently described the nature of this invention, as well as how to use it, further explanation is not considered necessary for any expert on the subject to understand its scope and benefits. It is also noted that, within its essential nature, the device may be implemented in other ways which differ from the one described by way of example. The protection sought shall equally apply in these cases, provided that its fundamental principal is not altered, changed or modified.

## Claims

1. Equipment for monitoring the output flow of the diffuser nozzles in agricultural spraying machines, allowing direct monitoring of the fluid produced by each diffuser nozzle of an agricultural spraying machine, **characterised in that** it includes at least one capacitive sensor (2), of high-sensitivity relative dielectric permittivity (εr) detector type, arranged on a support (3), close to the fluid dispersed by each diffuser nozzle of the spraying machine. The information collected by said capacitive sensors (2), is processed by a programmable logic controller (6), the data of which is displayed through display devices (7).

2. Equipment for monitoring the output flow of diffuser nozzles in agricultural spraying machines, which, according to the previous claim, is distinguishable because the display devices (7) emit visual and acoustic alerts.

3. Equipment for monitoring the output flow of diffuser nozzles in agricultural spraying machines, which, according to any of the preceding claims, is distinguishable because the display devices (7) are located in the driver's cab of the agricultural spraying machine.

4. Equipment for monitoring the output flow of diffuser nozzles in agricultural spraying machines, which, according to claims 1 and 2, is distinguishable because the programmable logic controller (6) comprises communication means (9), which transmit the information collected by the sensor (2) and processed by the programmable logic controller (6), to a server (10). From there the information is transmitted to various devices comprising the display means (7).

5. Equipment for monitoring the output flow of diffuser nozzles in agricultural spraying machines, which, according to any of the preceding claims, is distinguishable because the support (3) comprises connecting means (4).

6. Equipment for monitoring the output flow of the diffuser nozzles in agricultural spraying machines, which, according to the previous claim, is distinguishable because the connecting means (4) are removable.

7. Equipment for monitoring the output flow of the diffuser nozzles in agricultural spraying machines, which, according to any of the preceding claims, is distinguishable because the support (3) comprises a housing (5) where the capacitive sensor (2) is fixed and housed. This is then positioned facing the fluid dispersed from the diffuser nozzles (1.5).

8. Equipment for monitoring the output flow of diffuser nozzles in agricultural spraying machines, which, according to any of the preceding claims, is distinguishable because the capacitive sensor (2) is configured to measure the level of drift volatility.

9. Equipment for monitoring the output flow of diffuser nozzles in agricultural spraying machines, which, according to any of the preceding claims, is distinguishable because the programmable logic controller (6) calculates the size and quantity of the droplets dispersed from the sprayed fluid for each type of nozzle (1.5).

10. Equipment for monitoring the output flow of diffuser nozzles in agricultural spraying machines, which, according to any of the preceding claims, is distinguishable because the support (3) is water-repellent.
